# EUROPÄISCHE PATENTSCHRIFT

(11) **EP 0 662 259 B1**
(45) Veröffentlichungstag und Bekanntmachung des Hinweises auf die Patenterteilung: **07.02.1996**
(21) Anmeldenummer: 93919318.1
(22) Anmeldetag: 10.09.1993
(51) Int. Cl.: H01R 23/70

(54) **GESCHIRMTER ELEKTRISCHER KABELSTECKER**
SHIELDED ELECTRIC CABLE CONNECTOR
CONNECTEUR BLINDE POUR CABLES ELECTRIQUES

(30) Priorität: 23.09.1992 EP 92116268
(43) Veröffentlichungstag der Anmeldung: 12.07.1995
(73) Patentinhaber: SIEMENS AKTIENGESELLSCHAFT, D-80333 München (DE)
(72) Erfinder: MILDE, Gundolf,Dipl.-Ing., D-81375 München (DE)
(86) Internationale Anmeldenummer: EP9302456
(87) Internationale Veröffentlichungsnummer: WO9407284

(56) Entgegenhaltungen:
- EP-A- 0 158 561
- DE-C- 3 210 826
- DE-U- 9 015 255

## Beschreibung

Die Erfindung bezieht sich auf einen geschirmten elektrischen Kabelstecker zum Aufstecken auf eine Rückwandverdrahtung eines Baugruppenrahmens. Ein derartiger Kabelstecker ist z.B. durch die Unterlagen des deutschen Gebrauchsmuster DE-u-90 15 255 bekannt geworden. Danach weist der Kabelstecker eine Leiterplatte auf, über die Verbindungsleitungen von zumindest einem angeschlossenen Schaltkabel zu einem Steckerteil geführt sind, das auf eine Gegensteckeinrichtung der Rückwandverdrahtung aufsteckbar ist. Das Steckerteil ist von einem Schirmmantel umschlossen, der mit einer Schirmebene der Rückwand des Baugruppenträgers verbindbar ist.

In der modernen Breitbandvermittlungstechnik werden als Verbindungsleitungen zwischen verschiedenen Baugruppenträgern in großem Umfang Kabel für hochfrequente Signale mit Lichtwellenleitern oder Koaxialleitern verwendet. Außerdem kommen auch Kupferkabel mit niederfrequenten Signalen z.B. für Alarmierung, Steuerung oder Stromzuführung zum Einsatz. Bisher war es üblich, für die unterschiedlichen Kabeltypen unterschiedliche Steckverbinder zu verwenden, für die die Rückwandverdrahtung entsprechende Gegensteckeinrichtungen, z.B. in Form von Koaxialsteckern oder faseroptischen Steckern aufweisen mußte. Der Erfindung liegt die Aufgabe zugrunde, eine freizügige Beschaltung der Rückverdrahtung mit unterschiedlichen Kabelsteckertypen zu ermöglichen.

Diese Aufgabe wird durch die Erfindung gemäß Anspruch 1 gelöst. Bei der Verwendung von unterschiedlichen Leiterplatten ist es möglich, stets das gleiche Steckerteil mit dem diesem separat zugeordneten Schirmmantel zu verwenden. Dadurch kann die Rückwand des Baugruppenträgers mit einheitlichen Schnittstellen versehen werden, die eine Beschaltung mit unterschiedlichen Steckerkabeln ermöglichen. Insbesondere ist es nachträglich möglich, an einen Steckplatz der Rückwand z.B. anstelle eines Koaxialkabels ein elektrisch kompatibles Lichtleiterkabel im Betrieb anzuschließen.

Die Leiterplatten können Jeweils so konfiguriert sein, daß unterschiedliche Arten von Kabeln angeschlossen werden können. So ist es z.B. möglich, Koaxialleiter direkt an Lötaugen der Leiterplatte anzulöten. Lichtwellenleiter können über Sender- und Empfangsdioden mit den Leiterbahnen der Leiterplatte verbunden werden. Zusätzlich können z.B. für Stromzuführungen Niederfrequenzleiter mit elektrisch passiven Bandelementen,z.B. Filter, aufgebracht werden. Außerdem ist es möglich, aktive Bauelemente mit höherer Wärmebelastung auf der Leiterplatte anzuordnen. Diese Bauelemente werden auf den außenliegenden Kabelstekkern besser gekühlt als innerhalb des Baugruppenrahmens. Die Bauelemente können durch individuelle Schirmkappen geschützt sein, die mit den Masselagen der Leiterplatte verbunden sind. Durch den Schichtaufbau der Leiterplatte mit innenliegenden Signalleiterebenen und diese unmittelbar überdeckenden Masseschirmlagen wird erreicht, daß die Signalleitungen einen engen Erdbezug erhalten und somit elektromagnetisch vollkommen geschirmt sind. Der enge Abstand zwischen den Signallagen und den Masselagen wird z.B. durch sehr dünne Zwischenplatten erreicht, die durch äußere dickere Trägerplatten gestützt sind.

Durch eine vorteilhafte Weiterbildung der Erfindung nach Anspruch 4 wird erreicht, daß entlang den Seitenkanten der Leiterplatte zusätzlich zu den durchgehenden Masselagen zwischen diesen Masseleitungen verlaufen, die die Signallagen auch an dieser Seite abschirmen.

Durch die Weiterbildung nach Anspruch 5 werden die einzelnen Signalleitungen gegen wechselseitige Störungen geschützt, so daß höchstfrequente Signale übertragen werden können, ohne daß dazu aufwendige Koaxial- oder Lichtleiterstecker erforderlich sind.

Durch die Weiterbildung nach Anspruch 6 wird das Reflexionsverhalten am Steckerteil vorteilhaft beeinflußt und damit die Ubertragung verbessert.

Im folgenden wird die Erfindung anhand eines in der Zeichnung dargestellten Ausführungsbeispiels näher erläutert.

Es zeigen:
- Fig. 1: perspektivisch einen Kabelstecker mit einem Steckerteil, einer Leiterplatte und elektrischen Schaltkabeln,
- Fig. 2: einen schematisierten Schnitt durch die Leiterplatte nach Figur 1,
- Fig. 3: eine perspektivische Ansicht eines Kabelsteckers zum Anschluß von Lichtleitern.

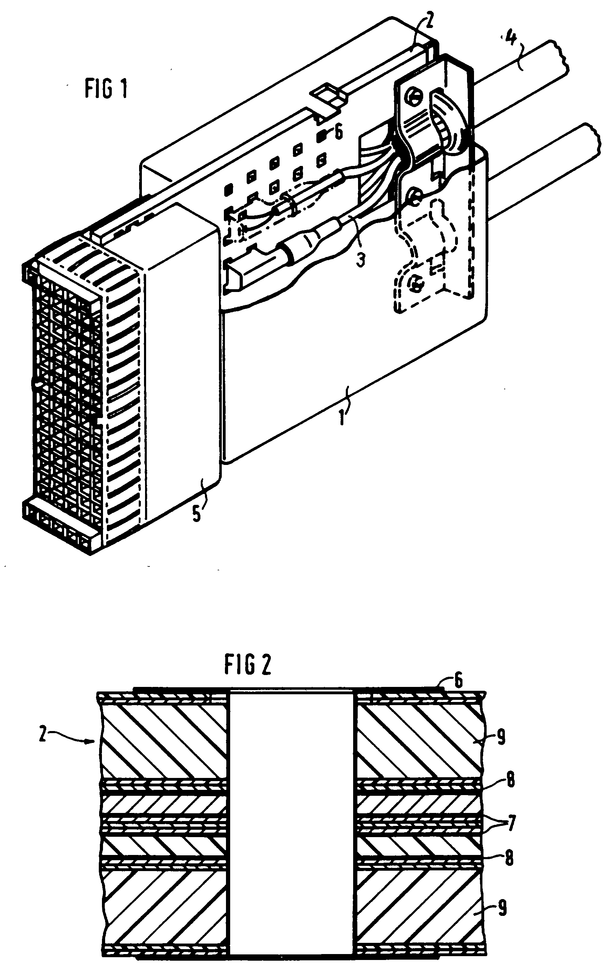

Nach den Figuren 1 und 2 weist ein Kabelstecker 1 eine Leiterplatte 2 auf, an die Koaxialleiter 3 eines Schaltkabels 4 angeschlossen sind. Auf der den Verbindungskabeln 4 gegenüberliegenden Seite ist an die Leiterplatte ein geschirmtes Steckerteil 5 angesetzt, daß auf eine entsprechende Gegensteckeinrichtung einer Rückwandverdrahtung eines Baugruppenträgers aufsteckbar ist.

Ein Schirmmantel des Steckerteils wird dabei mit der Rückwandverdrahtung so kontaktiert, daß die gesamte Steckvorrichtung wirksam gegen elektromagnetische Störungen abgeschirmt ist.

Die Leiterplatte 2 ist als Mehrlagenplatte ausgebildet, bei der Lötaugen 6 an die Oberfläche geführt sind. Signalleiter 7 sind in zwei inneren Lagen der Leiterplatte 2 zusammengefaßt. Im engen Abstand schließen sich daran großflächige Masselagen 9 an, die die Signallagen wirksam abschirmen. Darüber liegen zwei Trägerplatten 9, die die inneren Lagen stabilisieren und vor Beschädigungen schützen.

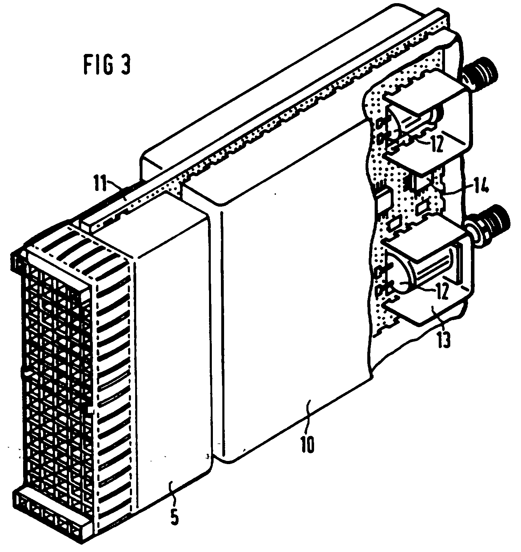

Nach Figur 3 weist ein anderer Kabelstecker 10 das gleiche Steckerteil aus Figur 1 und eine ähnliche Leiterplatte von gleichem Schichtaufbau auf. An die Leiterplatte sind elektro-optische Wandler 12 angesetzt, an die ein ankommender und ein abgehender Lichtleiter angeschlossen werden können. Die elektro-optischen Wandler 12 sind über die Signalleiter 7 der Leiterplatte 11 mit den Steckanschlüssen des Steckerteils 5 verbunden. Sie sind mit Schirmkappen 13 versehen, die mit den Masselagen 8 der Leiterplatte 11 verbunden sind. Außerdem sind auf der Leiterplatte aktive elektrische Bauelemente 14 angebracht, deren Verlustwärme in den Freiräumen zwischen den aufgesteckten Steckerreihen leicht abgeführt werden kann.

## Patentansprüche

1. Geschirmter elektrischer Kabelstecker (1, 10) zum Aufstecken auf eine Rückwandverdrahtung eines Baugruppenträgers, wobei der Kabelstecker (1) eine Leiterplatte (2, 11) aufweist, über die Verbindungsleitungen (z.B. 7) von zumindest einem angeschlossenen Schaltkabel (4) zu einem Steckerteil (5) geführt sind, das auf eine Gegensteckeinrichtung der Rückwandverdrahtung aufsteckbar ist, und wobei das Steckerteil (5) von einem Schirmmantel umschlossen ist, der mit einer Schirmebene der Rückwand des Baugruppenträgers verbindbar ist,
**dadurch gekennzeichnet,**
daß die Leiterplatte (2, 11) als Mehrlagenplatte zum wahlweisen oder gemischten Anschluß von Lichtleitern oder Koaxialleitern (3) oder einfachen Kupferleitungen dient, daß die Verbindungsleitungen in zumindest einer Lage von inneren Signalleitern (7) der Leiterplatte (2, 11) zusammengefaßt sind, daß die Signallage zu beiden Seiten von je einer eng benachbarten Masselage (8) überdeckt ist und daß unabhängig von der Art der angeschlossenen Kabel für alle Kabelstecker (2, 11) das gleiche Steckerteil (5) mit dem gleichen Schirmmantel an der Leiterplatte angebracht ist.

2. Kabelstecker nach Anspruch 1,
**dadurch gekennzeichnet,**
daß die Lichtleiter an elektro-optischen Wandlern (12) enden und daß diese mit den Signalleitern (7) verbunden sind.

3. Kabelstecker nach Anspruch 1 oder 2,
**dadurch gekennzeichnet,**
daß auf der Leiterplatte elektrische Bauelemente (14) angeordnet sind, die durch elektrisch leitende Kappen (13) abgedeckt sind, die mit der Masselage (8) kontaktiert sind.

4. Kabelstecker nach Anspruch 1, 2 oder 3,
**dadurch gekennzeichnet,**
daß äußere Leiterbahnen der Signallagen im Bereich der Längskanten der Leiterplatte (2, 11) als Masseleiter ausgebildet sind.

5. Kabelstecker nach Anspruch 4,
**dadurch gekennzeichnet,**
daß zu beiden Seiten jeweils eines der Signalleiter (7) in der Signallage Masseleiter angeordnet sind und daß die Signalleiter (7) in Kontakten des Steckerteils enden, die von masseführenden Kontakten umgeben sind.

6. Kabelstecker nach Anspruch 4 oder 5,
**dadurch gekennzeichnet,**
daß in den Signalleitern der Leiterplatte Kompensationsfiguren z.B. Kapazitätsflächen eingebracht sind.

## Claims

1. Screened electric cable plug (1, 10) for plugging onto a back-panel wiring of a mounting rack, the cable plug (1) having a printed circuit board (2, 11) via which the connecting lines (e.g. 7) are passed from at least one connected switchboard cable (4) to a plug part (5) which can be pushed onto a mating connector device of the back-panel wiring and the plug part (5) being enclosed by a screen sheath which can be connected to a screen plane of the back panel of the mounting rack, characterized in that the printed circuit board (2, 11) serves as a multilayer circuit board for optional or mixed connection of optical fibres or coaxial conductors (3) or simple copper lines, in that the connecting lines are combined in at least one layer of internal signal conductors (7) of the printed circuit board (2, 11), in that the signal layer is covered on both sides by in each case one closely adjacent ground layer (8) and in that the same plug part (5) having the same screen sheath is mounted on the printed circuit board for all cable plugs (2, 11) independently of the type of cables which are connected.

2. Cable plug according to Claim 1, characterized in that the optical fibres terminate at electrooptical transducers (12) and in that the latter are connected to signal conductors (7).

3. Cable plug according to Claim 1 or 2, characterized in that there are arranged on the printed circuit board electric components (14) which are covered by electrically conductive caps (13) which make contact with the ground layer (8).

4. Cable plug according to Claim 1, 2 or 3, characterized in that outer conductor tracks of the signal layers are configured as earth conductors in the region of the longitudinal edges of the printed circuit board (2, 11).

5. Cable plug according to Claim 4, characterized in that earth conductors are arranged on both sides of in each case one of the signal conductors (7) in the signal layer and in that the signal conductors (7) terminate in contacts of the plug part, which contacts are surrounded by earthed contacts.

6. Cable plug according to Claim 4 or 5, characterized in that compensation figures, e.g. capacitance surfaces, are incorporated in the signal conductors of the printed circuit board.

## Revendications

1. Connecteur électrique blindé (1,10) pour câble, destiné à être emmanché sur un câblage arrière d'un porte-modules, le connecteur (1) de câble comportant une plaquette à circuits imprimés (2,11), au moyen de laquelle des conducteurs de raccordement (par exemple 7) raccordent au moins un câble raccordé de branchement (4), à une partie (5) du connecteur, qui peut être emmanchée sur un dispositif de connexion antagoniste du câblage arrière, et la partie (5) du connecteur étant entourée d'une gaine de blindage, qui peut être reliée à un plan de blindage de la paroi arrière du porte-modules,
caractérisé par le fait que la plaquette à circuits imprimés (2,11) sert de plaquette à couches multiples pour effectuer le raccordement au choix ou le raccordement mixte de guides de lumière ou de guides coaxiaux (3) ou de simples conducteurs en cuivre, les conducteurs de raccordement sont rassemblés en au moins une couche de conducteurs intérieurs de transmission de signaux (7) de la plaquette à circuits imprimés (2,11), la couche de conducteurs de transmission de signaux est recouverte des deux côtés, de couches de masse (8) en contact intime avec elle et la même partie (5) du connecteur pourvue de la même gaine de blindage est disposée sur la plaquette à circuits imprimés pour tous les connecteurs (2,11) de câble, indépendamment du type des câbles raccordés.

2. Connecteur pour câble suivant la revendication 1, caractérisé par le fait que les guides de lumière aboutissent à des transducteurs électro-optiques (12) et que ces derniers sont reliés aux conducteurs de transmission de signaux (7).

3. Connecteur pour câble suivant la revendication 1 ou 2, caractérisé par le fait que sur la plaquette à circuits imprimés sont disposés des composants électriques (14), qui sont recouverts de capuchons conducteurs de l'électricité (13), qui sont en contact avec la couche de masse (8).

4. Connecteur pour câble suivant la revendication 1, 2 ou 3, caractérisé par le fait que des pistes conductrices extérieures des couches de conducteurs de transmission de signaux sont formées en tant que conducteur de masse, dans la zone des bords longitudinaux de la plaquette à circuits imprimés (2,11).

5. Connecteur pour câbles suivant la revendication 4, caractérisé par le fait que des conducteurs de masse sont disposés des deux côtés de l'un des conducteurs de signaux (7) dans la couche de conducteurs de transmission de signaux et les conducteurs de transmission de signaux (7) se terminent par des contacts de la partie du connecteur, qui sont entourés de contacts reliés à la masse.

6. Connecteur pour câbles suivant la revendication 4 ou 5, caractérisé par le fait que des éléments de compensation, par exemple des surfaces capacitives, sont insérés dans les conducteurs de transmission de signaux de la plaquette à circuits imprimés.
